# EUROPEAN PATENT APPLICATION

(11) **EP 1 635 531 A2**
(43) Date of publication of application: **15.03.2006**
(21) Application number: 05018433.2
(22) Date of filing: 24.08.2005
(51) Int. Cl.: H04L 29/06

(54) **Application control system and application control method**

(30) Priority: 14.09.2004 JP 2004267258
(71) Applicant: NTT DoCoMo, Inc., Tokyo 100-6150 (JP)
(72) Inventor: Nakamura, Tomonori Intellectual Property Dept., Chiyoda-ku Tokyo 100-6150 (JP); Yamaguchi, Hiroki Intellectual Property Department, Chiyoda-ku Tokyo 100-6150 (JP); Nagai, Ai c/o Intellectual Property Department, Chiyoda-ku Tokyo 100-6150 (JP); Matsui, Junichi Intellectual Property Department, Chiyoda-ku Tokyo 100-6150 (JP)
(74) Representative: GROSSE BOCKHORNI SCHUMACHER

(57) **Abstract**

To provide an application control system and application control method that ensure security when exercising operation control of application software from a service-providing server and prevent waste of communication resources even when control is exercised frequently.

The application control system comprises a request-receiving part that receives request information that is transmitted from a service-providing server, which provides application software stored by the storage part of a mobile terminal, and that requests the operation control of application software; a request-judging part that judges whether or not , receipt of the request information satisfies a specified condition; and a command-transmitting part that, only in the case that receipt of the request information satisfies the specified condition, transmits to the mobile terminal a command that controls the application software.

## Description

### BACKGROUND OF THE INVENTION

### Field of the Invention

The present invention relates to an application control system and application control method.

### Related Background Art

By storing application software such as an electronic commuter pass or a map display in the memory of a mobile terminal and having a user execute the stored application software, mobile terminals can be used for a variety of applications.

A method has been presented whereby a control server, which transmits application software to a mobile terminal, controls operation of the application software stored in the mobile terminals' memory (for example, see Japanese Patent Laid-Open Publication No. 2003-186677). With the application control method disclosed in Japanese Patent Laid-Open Publication No. 2003-186677, the control program that controls operation of the application software is transmitted to the mobile terminal from the control server. The control program is executed in the case that the mobile terminal fulfills a specified condition. In this way, operation of the application software stored in the mobile terminals' memory is controlled.

With increased diversification of services, demands are increasing for a system that enables control of the operation of mobile terminal application software triggered not only by control requests from control servers but also by control requests from service-providing servers which provide application software. For example, in regard to application software that functions as proof of membership when buying a product or arranging a rental, there are requirements that it be possible, for reasons such as non-payment of user fees, to stop the operation of application software triggered by a control request from the service-providing server. Also, there are requirements that it be possible to stop the operation of application software, triggered by a control request from a service-providing server in order to prevent misuse of a mobile terminal by the finder thereof, or the like, which can occur when a user loses his mobile terminal.

However, with methods whereby a control program is transmitted directly to a mobile terminal from a service-providing server, there is the issue that there is room for improvement in security because improper control of application software can occur through a transmission from a hostile service-providing server with the goal of misusing the application software. Also, there is the issue that when control of application software operation is exercised frequently, communications traffic increases and as a result communications resources may be wasted.

### SUMMARY OF THE INVENTION

To address these problems, the present invention seeks to provide an application control system and application control method which ensure security when control of application software is exercised from a service-providing server and which prevent the waste of communications resources even when control is exercised frequently.

The application control system of the present invention comprises: (1) request-receiving means for receiving request information that is transmitted from a service-providing server, which provides application software stored by a storage means of a mobile terminal, and that requests operation control of the application software; (2) request-judging means for judging whether or not receipt of the request information satisfies a specified condition; and (3) command-transmitting means that, only in the case that receipt of the request information satisfies the specified condition, transmits to the mobile terminal a command that controls the application software.

By means of the application control system of the present invention, the request-judging means judges whether or not receipt of the request information that requests control of the application software operation satisfies a specified condition, so request information from a hostile server which does not satisfy the specified condition will be ignored by the request-judging means and in this way security is ensured when exercising operation control of application software from a service-providing server. Also, because the command to control the application software is transmitted to the mobile terminal only in the case that receipt of the above-mentioned request information meets a specified condition, unnecessary command transmissions are eliminated even in cases where control is exercised frequently, and waste of communications resources can be prevented.

Further, it is preferable that the specified condition be that the request information is received from a service-providing server registered beforehand. As a result, only a service-providing server registered beforehand can perform operation control of the application software, so a higher level of security can be ensured.

It is also preferable that the specified condition be that the request information is a request to control application software registered beforehand. As a result, it is sufficient to transmit to the mobile terminal commands controlling only application software registered beforehand, and therefore transmission of unnecessary commands is eliminated and waste of communication resources can be prevented to a greater degree.

It is also preferable that the specified condition be that the request information request control of application software that is stored in the mobile terminal of a user registered beforehand. As a result, commands will not be transmitted to the mobile terminal of a user not registered beforehand, that is, a user whose control of the application software is unwanted, and therefore waste of communication resources can be prevented to a greater degree.

It is also preferable to have a call-transmitting means for transmitting call information to the mobile terminal before the command-transmitting means transmits a command and to have the specified condition be that there is a response from the mobile terminal in response to the transmission of the call information. As a result, in the situation that a response from the mobile terminal in response to the transmission of the call information cannot be confirmed before the command-transmitting means transmits a command, a command will not be transmitted and therefore waste of communication resources can be prevented to a greater degree.

It is also preferable to have a notification-receiving means for receiving notification, transmitted from the mobile terminal, of receipt of the command, and a notification-transmitting means for transmitting to the service-providing server the receipt notification that the notification-receiving means received. As a result, the service-providing server can confirm whether or not the mobile terminal received the command that controls the application software.

It is also preferable to have a status-receiving means for receiving control execution status of the application software, transmitted from the mobile terminal, and a status management means for maintaining the execution status thus received. As a result, the application control system can maintain the execution status of the application software control.

The application control method of the present invention comprises: (1) a request-receiving step for receiving request information that is transmitted from a service-providing server, which provides application software stored by a storage means of a mobile terminal, and that requests operation control of the application software; (2) a request-judging step for judging whether or not receipt of the request information satisfies a specified condition; and (3) a command-transmitting step that, only in the case that receipt of the request information satisfies the specified condition, transmits to the mobile terminal a command that controls the application software.

By means of the application control method of the present invention, the request-judging step judges whether or not receipt of the request information that requests control of the application software operation satisfies a specified condition, so request information from a hostile server which does not satisfy the specified condition will be ignored and in this way security is ensured when performing operation control of application software from a service-providing server. Also, because the command to control the application software is transmitted to the mobile terminal only in the case that receipt of the above-mentioned request information meets s specified condition, unnecessary command transmissions are eliminated even in cases where control is exercised frequently, and waste of communications resources can be prevented.

By means of the present invention, an application control system and application control method can be provided which ensure security when exercising operation control of application software from a service-providing server and prevent waste of communications resources, even in cases where control is exercised frequently.

### BRIEF DESCRIPTION OF THE DRAWINGS

Fig. 1 is a drawing for describing the application control system;
Fig. 2 is a diagram for explaining one example of the information that constitutes the specified condition;
Fig. 3 is a sequence diagram showing the processing sequence for the mobile terminal that is the object of control;
Fig. 4 is a sequence diagram showing the processing sequence for the mobile terminal that is not the object of control;
Fig. 5 is a sequence diagram showing the processing sequence for the mobile terminal that does not have the control function; and
Fig. 6 is a sequence diagram showing the processing sequence for the mobile terminal for which mutual communication cannot be established.

### DESCRIPTION OF THE PREFERRED EMBODIMENTS

Below, the preferred embodiments of the present invention are described, referring to the attached drawings. Note that in the descriptions of the drawings, identical elements are given the same reference number and redundant descriptions are omitted.

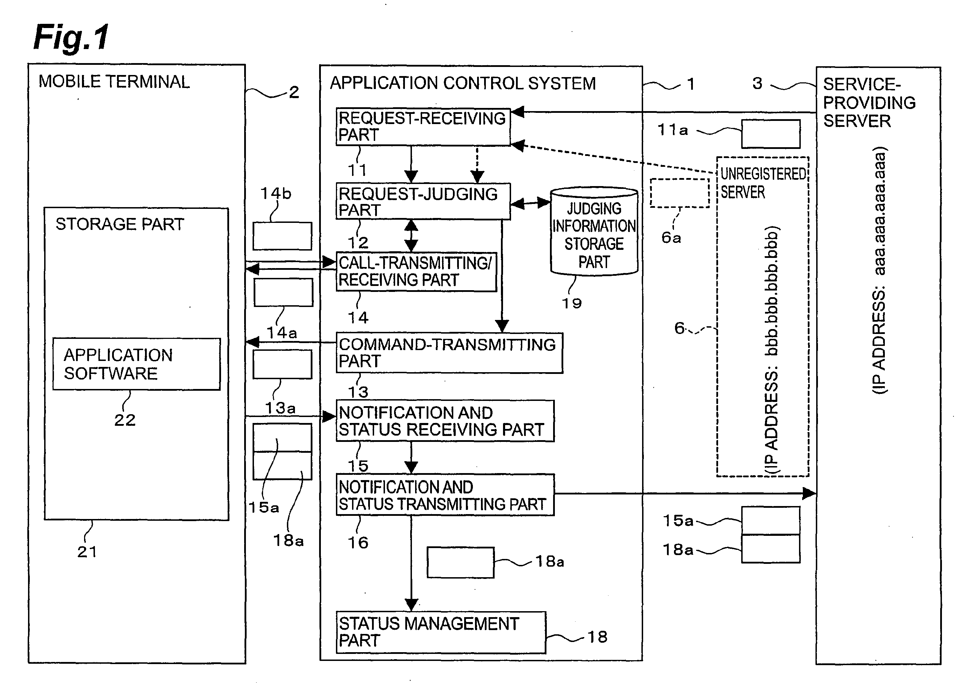

The application control system that is an embodiment of the present invention is described using Fig. 1. Fig. 1 is a drawing for describing application control system 1. The application control system 1 is configured as a computer system (or a collection of computer systems) physically comprising a CPU (Central Processing Unit), a memory, a storage device such as a hard disk, a communication device such as a modem or LAN card, an input device such as a mouse or keyboard, a display device such as a flat panel display, and the like.

As functional constituent elements, the application system 1 comprises a request-receiving part (request-receiving means) 11, a request-judging part (request-judging means) 12, a command-transmitting part (command-transmitting means) 13, a call-transmitting/receiving part (call-transmitting means) 14, a notification and status receiving part (notice-receiving means and status-receiving means) 15, a notification and status transmitting part (notification-transmitting means and status-transmitting means) 16, a status management part (status management means) 18, and a judgment information storage part 19.

Further, separate from the application control system 1, there are a mobile terminal 2 and a service-providing server 3 which perform communication with the application control system 1.

The mobile terminal 2 has a storage part (storage means) 21 for storing application software 22. As the storage part 21, a memory or the like is used, for example. The application software 22 functions in the mobile terminal 2 as a proof of membership, a map display or the like, for example.

The service-providing server 3 performs provision of the application software 22, and other such functions, to a user who has the mobile terminal 2. The IP address of the service-providing server 3 is "aaa.aaa.aaa.aaa".

Now, each constituent element of the application control system 1 will be explained. The request-receiving part 11 is a part that receives request information 11a transmitted from the service-providing server 3. It is the part that, can even receive request information 6a transmitted from a hostile unregistered server 6, for example. Note that the request information 11a is information that makes a request specifying over which of the application software 22 in the mobile terminal 2 operation control is requested. This operation control is, for example, stopping or restarting the operation of the application software 22, communicating a parameter to the application software 22 to heighten the level of operation freedom, or the like.

The request-judging part 12 is the part that judges whether receipt of the request information 11 a by means of the request receiving part 11 satisfies a specified condition C. Depending on the established content of the specified condition C, even the application software 22 to be the object of operation control will be different.

The call-transmitting/receiving part 14 is the part that, in the case that receipt of the request information 11 a by means of the request receiving part 11 satisfies the specified condition C, transmits call information 14a to the mobile terminal 2 and also receives from the mobile terminal 2 response information 14b which is the reply to this call information 14a.

The judgment information storage part 19 is the part that stores the information that constitutes the specified condition C. As information that constitutes the specified condition C, there is registered server information, registered application software information, registered user information, information as to the existence or lack of a response, and the like.

In the case that the specified condition C is that only request information transmitted from a specific server that has been registered beforehand be handled, the request-judging part 12, based on registered server information stored in the judgment information storage part 19, judges whether or not the request information was transmitted from a specific server registered beforehand, such as the service-providing server 3.

Further, in the case that the specified condition C is that only request information that requests control of specific application software that has been registered beforehand be handled, the request-judging part 12, based on registered application software information stored in the judgment information storage part 19, judges whether or not the request information requests control of specific application software registered beforehand.

Further, in the case that the specified condition C is that only request information that requests control of application software stored in the mobile terminal of a user who has been registered beforehand be handled, the request-judging part 12, based on registered user information stored in the judgment information storage part 19, judges whether or not the request information requests control of above-mentioned application software of a user registered beforehand.

Note that specified condition C may be that only request information that was transmitted from a specific server and that also has as its object only request information that requests control of specific application software be handled. Also, specified condition C may be that only request information that was transmitted from a specific server and that also has as its object only request information that requests control of application software stored in the mobile terminal of a specific user be handled.

Further, the specified condition C may have as a condition that the call-transmitting/receiving part 14 transmit the call information 14a to the mobile terminal 2 and that the mobile terminal 2 respond thereto. In this case, the request-judging part 12 outputs instruction information to the call-transmitting/receiving part 14 instructing it to transmit the call information 14a. The call-transmitting/receiving part 14 transmits the call information 14a in response to the output of this instruction information and receives the response information 14b transmitted back in response thereto. In the case that this response information 14b could be received, it is judged that the communication environment is good, while in the case that the response information 14b could not be received it is judged that the communication environment is poor. If it is judged that the communication environment is poor, transmission of a command 13a, of the kind mentioned later, is not done, so waste of communication resources can be prevented. In contrast, if it is judged that the communication environment is good, in other words, in the case that the response information 14b could be received, the call-transmitting/receiving part 14 outputs the response information 14b thus received to the request-judging part 12. The request-judging part 12, in response to the output of this response information 14b, outputs command information to the command-transmitting part 13. The command-transmitting part 13, in response to this command information, transmits the command 13a to the mobile terminal 2.

The command-transmitting part 13 is the part that transmits the command 13 a to the mobile terminal 2 only in the case that receipt of the request information 11a satisfies the specified condition C and moreover that the mobile terminal 2 has responded to the call information 14a which the call-transmitting/receiving part 14 transmitted to the mobile terminal 2. The command 13a is the command that controls the application software 22. Here, because request information 6a, received for example from the unregistered server 6, does not satisfy the specified condition C, the command 13a is not transmitted. Therefore, when exercising operation control of the application software 22 from the service-providing server 3, security is ensured. Also, because the command 13a is transmitted to the mobile terminal 2 only in the case that receipt of the request information 11a satisfies the specified condition C and moreover that the mobile terminal 2 has responded to the call information 14a which the call-transmitting/receiving part 14 transmitted to the mobile terminal 2, transmission of unnecessary commands is eliminated even in the case that control of application software 22 is exercised frequently. As a result, waste of communication resources can be prevented.

The notification and status receiving part 15 is the part that receives the receipt notification 15a and the execution status 18a transmitted from the mobile terminal 2. Note that the receipt notification 15a is a notification that indicates to the application control system 1 receipt of the command 13a by the mobile terminal 2. Likewise, the execution status 18a indicates that the status is that operation control of the application software 22 has been executed. Included in the execution status 18a are, for example, status of the success or failure of operation control of the application software 22, parameters communicated from the mobile terminal 2 after control has been exercised, and the like.

The notification and status transmitting part 16 is the part that transmits to the service-providing server 3 the receipt notification 15a and execution status 18a that were received by the notification and status receiving part 15. By means of the notification and status receiving part 15 and the notification and status transmitting part 16, receipt of the command 13a by the mobile terminal 2 is conveyed to the service-providing server 3 and thus the service-providing server 3 can recognize whether or not the mobile terminal 2 has received the command 13a which controls the application software. Also, because the status that operation control of the application software 22 has been executed is conveyed to the service-providing server 3, service-providing server 3 can recognize the status that control has been executed.

The status management part 18 is the part that performs management such as maintaining the execution status 18a that the notification and status receiving part 15 has received. Included in the management of execution status 18a are, for example, statistics related to the number of successes and number of failures in the operation control of application software 22, statistics related to parameters communicated from the mobile terminal 2 after control has been done, and the like. Using the execution status 18a managed in this way, such things as, for example, assessing fees to the requester of control according to the number of times of successful operation control of the application software 22 also are possible. Managing reference to and/or outputting of the execution status 18a is also possible.

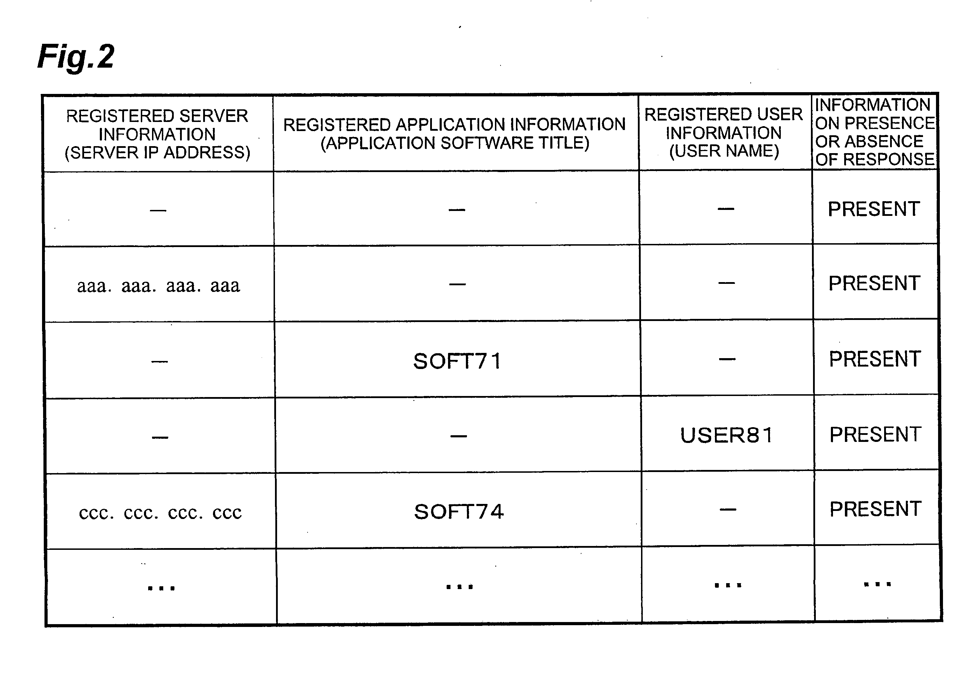

Continuing, the information that constitutes the specified condition C will be described, while also using Fig. 2. Fig. 2 is a diagram for explaining one example of the information that constitutes the specified condition C.

The example of Fig. 2 is an example where registered server information, registered application software information, registered user information, information on the presence or absence of a response and the like constitute the specified condition C. As registered server information, the IP address of the server is used. As registered application software information, the title of the application software is used. As registered user information, the user name of the user who has the mobile terminal 2 is used. For the registered server information, registered application software information and registered user information, there are no particular limitations as long as the information can provide a unique specification. In this way, as long as it is something that can provide a unique specification, the registered server information may be the server name and/or the registered application software information may be a size and version.

In the case that the specified condition C is that the call-transmitting/receiving part 14 transmit the call information 14a to the mobile terminal 2 and the mobile terminal 2 respond thereto, in other words, in the case where information on the presence or absence of a response corresponds to "present," if the call-transmitting/receiving part 14 transmits the call information 14a to the mobile terminal 2 and in response thereto receives back the response information 14b, the result is that only the command 13a is transmitted.

The specified condition C in the following explanation has as a premise that the mobile terminal 2 responds to the call information 14a transmitted to the mobile terminal 2.

In the case that the specified condition C is that request information transmitted from the server whose IP address is "aaa.aaa.aaa.aaa" be received, because the IP address of the service-providing server 3 which transmits the request information 11 a is also "aaa.aaa.aaa.aaa", the specified condition C is satisfied and the command 13 a is transmitted. On the other hand, because the IP address of the unregistered server 6 which has transmitted the request information 6a is "bbb.bbb.bbb.bbb", the specified condition C is not satisfied and the command 13a is not transmitted. As a result, operation control of the application software 22 can be exercised and a higher level of security is ensured.

Alternatively, in the case that the specified condition C is that the request information request to control the application software 22 whose application software title is "SOFT 71", the result is that only the command 13a to the mobile terminal 2 which stores the application software 22 whose application software title is "SOFT 71" is transmitted. In this way, because the transmission of unnecessary commands is eliminated, waste of communication resources can be prevented to a greater degree.

In the case that the specified condition C is that the request information request to control the application software 22 that is stored in the mobile terminal 2 of a user whose user name is "USER81", only command 13a is transmitted to the mobile terminal 2 of the user whose user name is "USER81". In contrast, users who do not wish to control the operation of the application software 22 are not stored beforehand as registered user information and the command 13a is not transmitted to the mobile terminals 2 of these users. As a result, waste of communication resources can be prevented.

Alternatively, in the case that the specified condition C is that the request be transmitted from the server whose IP address is "ccc.ccc.ccc.ccc" and that it be for control of the application software having an application software title "SOFT 74", if the IP address of the server that transmits the request information 11 a is "ccc.ccc.ccc.ccc", the command 13a is transmitted only to the mobile terminal 2 that stores the application software having the application software title "SOFT74".

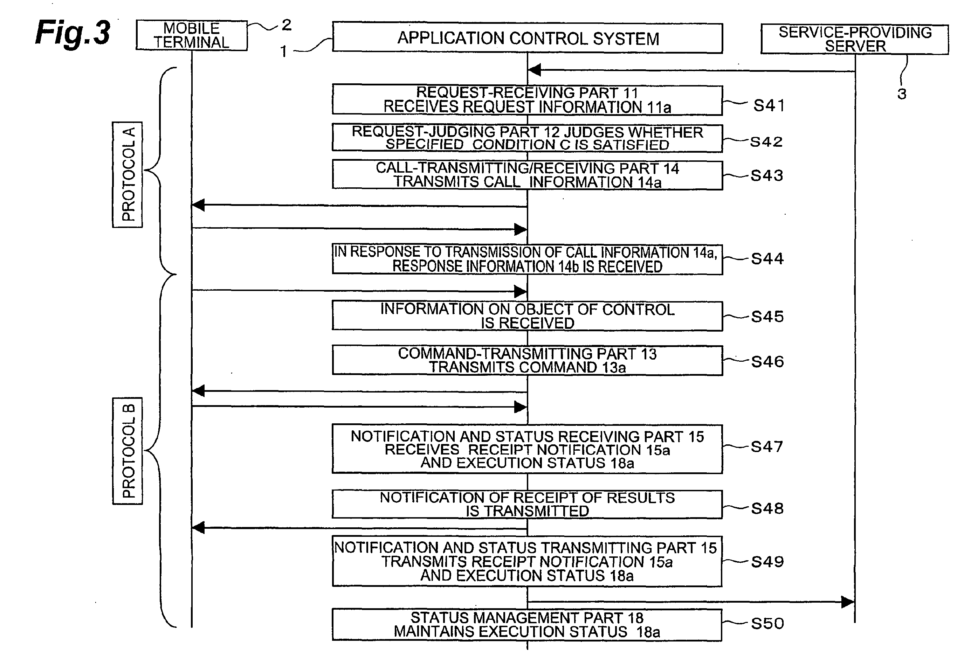

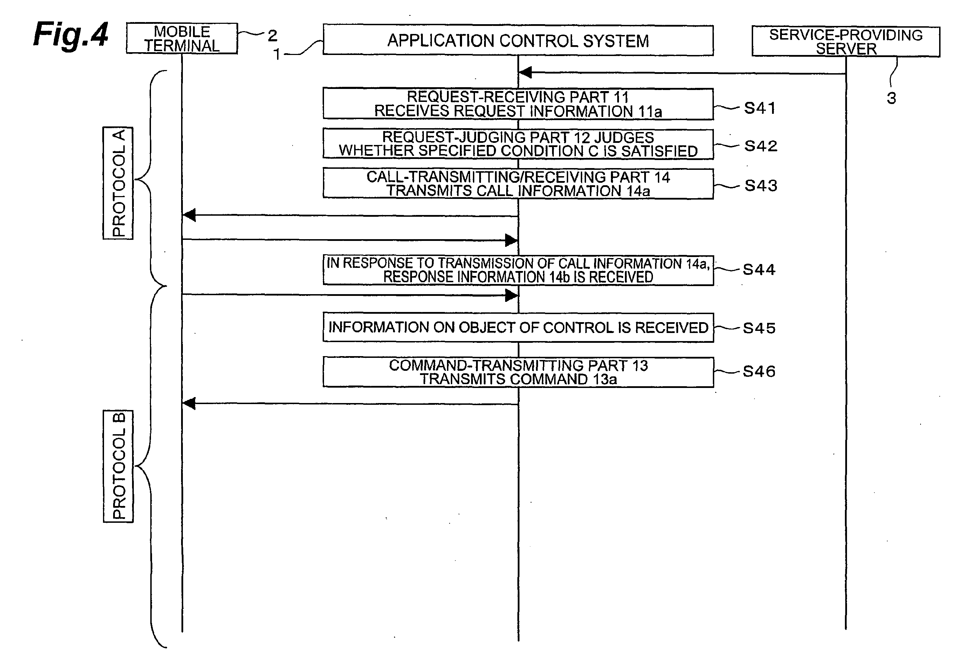

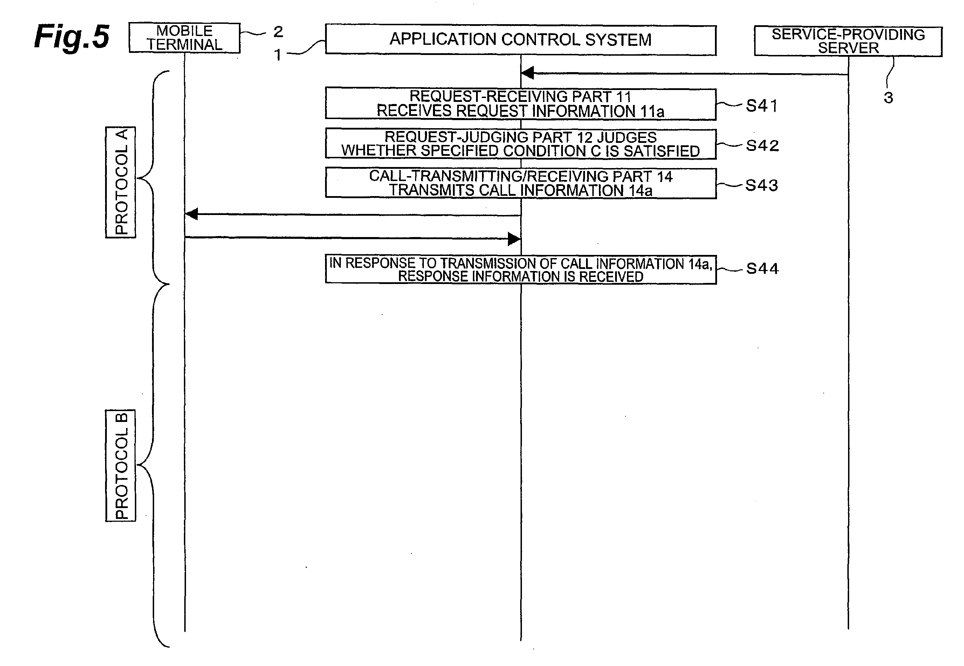

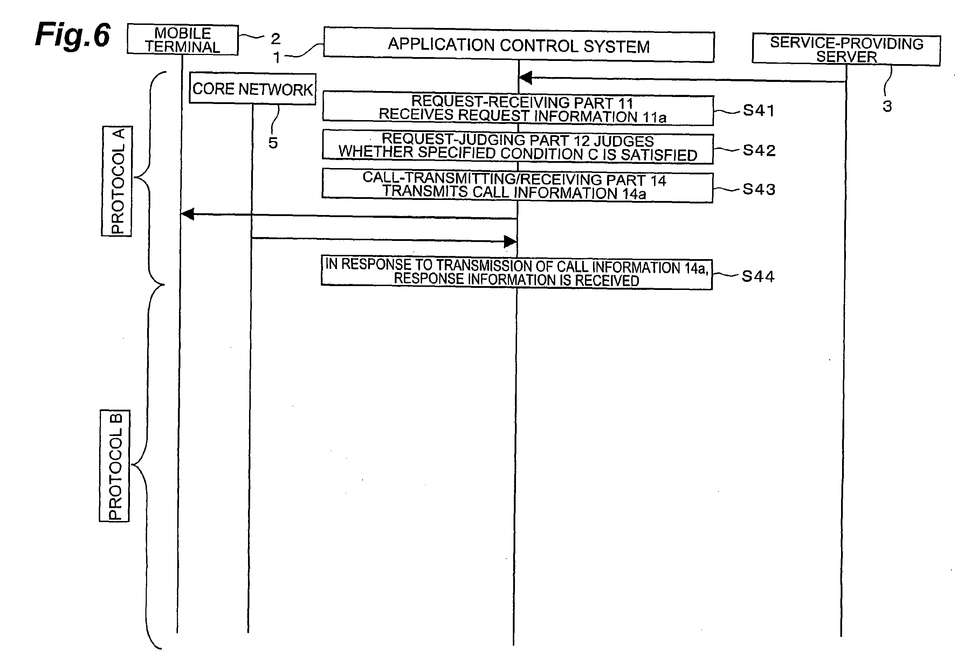

Continuing, the method whereby operation control of the application software 22 is requested from the service-providing server 3 using the application control system 1 will be described using the sequence diagram shown in Fig. 3 through Fig. 6. These are sequence diagrams that show the processing order: Fig. 3, the processing corresponding to the mobile terminal 2 that is the object of control; Fig. 4, the processing corresponding to the mobile terminal 2 that is not the object of control; Fig. 5, the processing corresponding to the mobile terminal 2 that does not have the control function; and Fig. 6 the processing corresponding to the mobile terminal 2 for which mutual communication cannot be established.

As shown in Fig. 3, in the processing corresponding to the mobile terminal 2 that is the object of control, first the request receiving part 11 receives, the request information 11a transmitted from the service-providing server 3 (Step S41) and the request-judging part 12 judges whether or not receipt of the request information 11 a satisfies the specified condition C (Step S42). In the case that the specified condition C is satisfied, the call-transmitting/receiving part 14 transmits the call information 14a to the mobile terminal 2 (Step S43) and receives the response information 14b from the mobile terminal 2 in response to the transmission of that transmitted call information 14a (Step S44). If a response can be received, it can be judged that the communication environment is good. Here, for Steps S41 through S44, communication is done using a protocol A. For protocol A, for example, the same protocol is used as for a general electronic mail calling method. Note that Step S41 corresponds to the request receiving step and Step S42 to the request-judging step.

Next, the application control system 1 receives the control object information from the mobile terminal 2 (Step S45). This control object information includes such things as information relating to the user and equipment of the mobile terminal 2. Next, the command-transmitting part 13 transmits the command 13a to the mobile terminal 2 (Step S46). Next the notification and status receiving part 15 receives from the mobile terminal 2 the receipt notification 15a and the execution status 18a (Step S47). Next, the application control system 1 transmits to the mobile terminal 2 notification of receipt of results (Step S48). This notification of receipt of results is a notification that indicates that receipt notification 15a and execution status 18a have been received. Next, the notification and status transmitting part 16 transmits this receipt notification 15a and execution status 18a to the service-providing server 3 (Step S49). Next, the status management part 18 maintains this execution status 18a (Step S50). Here, for Steps S45 through S50, communication is done using a protocol B. For protocol B, for example, HTTP is used. Note that Step S46 corresponds to the command-transmitting step.

As shown in Fig. 4, for the processing corresponding to the mobile terminal 2 that is not the object of control, Steps S41 through S46 are the same as Fig. 3. In Step S42, because it is not the object of control, it is judged that the specified condition C is not satisfied. Therefore, in step S46, the command 13a that indicates the end of this processing is transmitted to the mobile terminal 2.

As shown in Fig. 5, for the processing corresponding to the mobile terminal 2 that does not have the control function, Steps S41 through S43 are the same as Fig. 3 and Fig. 4. In Step S44, in response to the transmission of call information 14a, a response is received from the mobile terminal 2 indicating that the mobile terminal 2 does not have a control function. Therefore, Steps S45 and following, including Step S46 which performs transmission of the command 13a from command-transmitting part 13 are not performed.

As shown in Fig. 6, for the processing corresponding to the mobile terminal 2 for which mutual communication cannot be established, Steps S41 through S43 are the same as Fig. 3 through Fig. 5. In Step S44, because the response to transmission of call information 14a is a response from a core network 5, it is judged that mutual communication with the mobile terminal 2 cannot be established. Therefore, Steps S45 and following, including Step S46 which performs transmission of the command 13a from command-transmitting part 13, are not performed. Afterward, until mutual communication can be established, the processing from Step S41 is repeated.

The effect of the present embodiment will be described using Fig. 1. Because the request-judging part 12 judges whether or not receipt of the request information 11 a requesting to control operation of the application software 22 satisfies the specified condition C, the request information 6a from a hostile unregistered server 6 that does not satisfy the specified condition C is ignored by the request-judging part 12. As a result, security is ensured when exercising operation control of the application software 22 from the service-providing server 3. Also, only in the case that receipt of the request information 11 a satisfies the specified condition C does the command-transmitting part 13 transmit to the mobile terminal 2 the command 13a which controls the application software 22. Therefore, even in the case that control is exercised frequently, the transmission of unnecessary commands is eliminated and, as a result, waste of communication resources can be prevented.

## Claims

1. An application control system comprising:
request-receiving means for receiving request information that is transmitted from a service-providing server, which provides application software stored by storage means of a mobile terminal, and that requests operation control of said application software;
request-judging means for judging whether or not
receipt of said request information satisfies a specified condition; and
command-transmitting means that, only in the case
that receipt of said request information satisfies said specified condition, transmits to said mobile terminal a command that controls said application software.

2. The application control system according to claim 1, wherein said specified condition is that said request information be received from a service-providing server registered beforehand.

3. The application control system according to claim 1 or claim 2, wherein said specified condition is that said request information be a request to control application software registered beforehand.

4. The application control system according to any one of claims 1 through 3, wherein said specified condition is that said request information request control of application software stored in the mobile terminal of a user registered beforehand.

5. The application control system according to any one of claims 1 through 4, further comprising call-transmitting means for transmitting call information to said mobile terminal before said command-transmitting means transmits a command, wherein said specified condition is that there be a response from said mobile terminal in response to the transmission of said call information.

6. The application control system according to any one of claims 1 through 5, further comprising:
notification-receiving means for receiving a notification of receipt of said command, transmitted from said mobile terminal; and
notification-transmitting means for transmitting to said service-providing server the receipt notification that said notification receiving means received.

7. The application control system according to any one of claims 1 through 6, further comprising:
status-receiving means for receiving control execution status of said application software transmitted from said mobile terminal; and
status management means for maintaining the execution status thus received.

8. An application control method comprising:
request-receiving step for receiving request information that is transmitted from a service-providing server, which provides application software stored by storage means of a mobile terminal, and that requests operation control of said application software;
request-judging step for judging whether or not receipt of said request information satisfies a specified condition; and
command-transmitting step that, only in the case that receipt of said request information satisfies said specified condition, transmits to said mobile terminal a command that controls said application software.
